# FASCICULE DE BREVET EUROPEEN

(11) **EP 0 489 674 B1**
(45) Date de publication et mention de la délivrance du brevet: **25.01.1995**
(21) Numéro de dépôt: 91460049.9
(22) Date de dépôt: 03.12.1991
(51) Int. Cl.: A01C 17/00

(54) **Procédé et dispositif pour modifier le spectre d'une machine d'épandage centrifuge de produits en grains, en vue de l'épandage en bordure de champ**
Verfahren und Vorrichtung zum Modifizieren des Spektrums eines Schleuderstreuers für körniges Material, um das Streuen auf den Feldrand zu ermöglichen
Process and device for modifying the distribution pattern of a broadcaster for grain material to allow spreading on the edge of the field

(30) Priorité: 04.12.1990 FR 9015397
(43) Date de publication de la demande: 10.06.1992
(73) Titulaire: SULKY-BUREL S.A., F-35220 Chateaubourg (FR)
(72) Inventeur: Burel,Jacques François Fabien, F-355220 Chateaubourg (FR)
(74) Mandataire: Le Faou, Daniel

(56) Documents cités:
- EP-A- 0 330 839
- EP-A- 0 385 236
- DE-A- 3 427 367
- DE-U- 1 778 378
- FR-A- 1 346 301

## Description

La présente invention concerne un procédé selon le préambule de la revendication 1 (voir EP-A-0330839) et un dispositif pour modifier le spectre d'une machine d'épandage centrifuge de produits en grains, en vue de l'épandage en bordure de champ.

Par l'expression "produits en grains", on entendra dans l'ensemble de la description et des revendications, des produits en vrac qui se présentent sous la forme de granulés ou de fines particules (poudre).

Lors de l'épandage de produits en grains, notamment d'engrais, dans un champ se pose le problème de l'épandage en bordure de ce champ.

Par le terme "bordure", on entend aussi bien un élément matériel (haie, fossé, barrière, route, etc.) qui borde l'un des côtés du champ, que la limite d'une parcelle (jouxtant une parcelle voisine dans laquelle est pratiquée une autre culture).

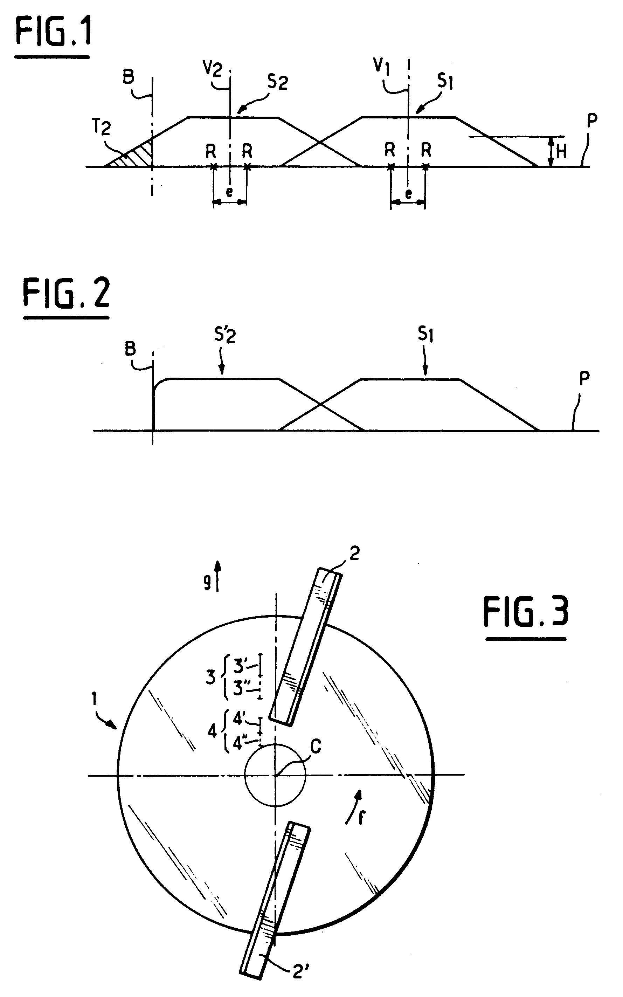

Ainsi, en référence à la figure 1, on a désigné par V₁ et V₂ les plans dans lesquels sont contenus les axes de passage successifs (aller et retour) d'un tracteur équipé d'une machine d'épandage centrifuge à deux disques. Les références R désignent les endroits de passage des roues du tracteur et e désigne l'écartement entre celles-ci.

Par S₁ et S₂, on a désigné les spectres d'épandage de la machine lors de ces deux passages successifs et par B la bordure du champ. Les spectres S₁ et S₂ ont la forme d'un trapèze isocèle, dont la grande base correspond au plan P du champ. La hauteur H entre le haut du spectre et le sol P est proportionnelle à la quantité de produit répandue en cet endroit.

Sur une grande largeur, qui correspond à la petite base du spectre, la répartition est uniforme. A chaque bord, la densité des produits décroit à peu près linérairement jusqu'à zéro. Les bords des deux spectres adjacents S₁, S₂ se chevauchent de sorte que la densité en cette zone soit la même que dans les petites bases des spectres.

Lorsque l'agriculteur commence l'épandage d'engrais dans le champ, il règle la machine de façon à obtenir une largeur d'épandage déterminée, qu'il conserve tout au long du traitement du champ. Ainsi, lors du trajet aller qui correspond au spectre S₁, les engrais sont répandus sur la largeur choisie à l'avance ; lors du passage retour, qui correspond au spectre S₂, une partie des engrais qui se trouve dans la portion T₂ du spectre est répandue au-delà de la bordure du champ formée par exemple par une haie.

On comprend aisément que ce phénomène est une source de gaspillage et contribue à la dégradation de l'environnement.

Pour pallier cet inconvénient, le but à atteindre est celui illustré à la figure 2. Ainsi, le spectre S₂ qui est voisin de la bordure du champ s'arrête à proximité immédiate de celle-ci de sorte qu'il n'y ait pas - ou pratiquement pas - d'engrais projeté dans la bordure.

On a proposé des dispositifs permettant d'atteindre un tel but.

Ainsi, on connait des machines d'épandage centrifuge dont les disques épandeurs à pales éjectrices sont démontables et amovibles ; pour l'épandage en bordure de champ on met en place un nouveau disque qui possède des pales courtes, la distance de projection des produits à épandre étant directement liées à la longueur de ces pales. La mise en place et le démontage d'un tel disque est une opération fastidieuse. De plus, le fait de devoir placer par vissage un nouveau disque augmente les risques d'erreur de montage, ce qui peut avoir de graves conséquences puisque les disques sont destinés à être entraînés en rotation à grande vitesse. Enfin, il s'agit de disques coûteux si bien que de nombreux utilisateurs n'en achètent qu'un par machine. De ce fait ils sont obligés de procéder à l'épandage à proximité des bordures de champ toujours dans le même sens (disque de remplacement placé du côté de la bordure de champ).

On a également proposé des disques qui comportent des pales dont on peut faire varier la longueur, de façon à pouvoir régler la distance de projection des engrais. La longueur des pales doit donc être choisie en fonction de la distance d'épandage que l'on souhaite, ce qui est source d'erreurs.

La présente invention a pour but de fournir un procédé et un dispositif qui permette d'atteindre le but précédemment décrit sans connaître les inconvénients des solutions déjà connues.

Il s'agit d'un procédé simple, facile à mettre en oeuvre.

Le dispositif pour ce faire est peu coûteux, adaptable sur le matériel existant et très simple à fabriquer.

Ce procédé - qui permet de modifier le spectre d'une machine d'épandage centrifuge de produits en grains en vue de l'épandage des produits en bordure de champ, cette machine comportant une trémie de réception des produits, et au moins un disque épandeur à pales éjectrices, de sorte que les produits s'écoulent de la trémie sous la forme d'un flux pour tomber sur le disque épandeur - consiste à intercepter et à dévier une partie de ce flux, partie qui correspond à un épandage vers la zone de bordure, pour la diriger vers le reste du flux ceci sans intercepter ni dévier ce flux restant, ni - bien entendu - modifier le débit total d'épandage.

Le dispositif pour la mise en oeuvre de ce procédé comprend une machine d'épandage centrifuge de produits en grains comportant une trémie de réception des produits, et au moins un disque épandeur à pales éjectrices, dans laquelle les produits s'écoulent de la trémie sous la forme d'un flux pour tomber sur le disque épandeur, caractérisé en ce qu'il comprend un volet déflecteur mobile disposé en sortie de trémie, apte à intercepter et dévier une partie du flux de produits s'écoulant de la trémie vers le disque épandeur, partie qui correspond à un épandage vers la zone de bordure, pour la diriger vers le reste du flux, ceci sans intercepter ni dévier cette partie restante du flux.

Selon d'autres caractéristiques avantageuses mais non limitatives :
- sur une machine comportant une paire de disques épandeurs qui tournent dans des sens inverses tels que leurs bords en regard se déplacent (circonférentiellement) dans le sens opposé au sens d'avance de la machine, le volet déflecteur intercepte la partie du flux qui est située du côté du centre du disque, pour la diriger vers l'extérieur et l'incorporer au reste du flux ;
- sur une machine comportant une paire de disque épandeurs qui tournent dans des sens inverses tels que leurs bords en regard se déplacent (circonférentiellement) dans le même sens que le sens d'avance de la machine, le volet déflecteur intercepte une partie du flux qui est située vers l'extérieur du disque pour la diriger vers le centre, et l'incorporer au reste du flux ;
- sur une machine comportant soit un disque unique d'épandage, soit deux disques dont un seul est actif, le volet déflecteur est adapté pour intercepter sélectivement, soit une partie du flux située vers le centre du disque pour la diriger vers l'extérieur, soit une partie du flux située vers l'extérieur pour la diriger vers le centre ;
- la position du volet est ajustable, des moyens de repérage étant prévus qui permettent de visualiser sa position ;
- le volet déflecteur est porté par une goulotte orientable ;
- le volet déflecteur est coulissant ;
- le volet déflecteur est articulé autour d'un axe horizontal ;
- le mouvement du volet est commandable à distance, par exemple à partir de l'engin qui tracte la machine d'épandage ;
- sur une machine d'épandage centrifuge équipée de deux disques épandeurs, il est prévu un volet déflecteur au-dessus de chaque disque.

D'autres caractéristiques et avantages de la présente invention apparaîtront à la lecture de la description détaillée qui va suivre, faite en référence aux dessins annexés dans lesquels :
- la figure 3 est une vue de dessus d'un disque épandeur à pales éjectrices, destinée à montrer comment s'opère la chute de produits en grains sur le disque ;
- la figure 4 est un schéma illustrant le principe de fonctionnement du procédé de l'invention ;
- la figure 5 est une vue d'une goulotte distributrice équipée d'un volet déflecteur permettant de mettre en oeuvre le procédé de l'invention ;
- la figure 5A est une vue en coupe du volet déflecteur selon le plan AA de la figure 5 ;
- les figures 6, 7 et 8 illustrent schématiquement, et en vue de dessus, des épandages en bordure, en montrant les zones couvertes en cours d'épandage, les figures 6 et 7 se rapportant à un épandage à l'aide de deux disques dans des configurations différentes quant à leurs sens de rotation et la figure 8 se rapportant à un épandage à l'aide d'un disque unique.

Le disque épandeur 1 représenté en vue de dessus à la figure 3 est le disque de droite d'une machine d'épandage centrifuge à deux disques épandeurs. Les sens d'avancement de la machine et de rotation du disque sont respectivement repérés par les flèches g et f sur cette figure, et la bordure de champ (non représentée) se trouve vers la droite de la figure.

Le disque 1, dont le centre de rotation est repéré par la référence C, comporte deux pales éjectrices 2 et 2′ constituées par des cornières en "L" et fixées sur le corps du disque comme cela est bien connu.

La machine d'épandage est par exemple équipée d'une goulotte de type connu, disposée entre la trémie de stockage des engrais et le disque 1, qui dirige les engrais sur le disque. Il s'agit d'une goulotte orientable, qui permet de faire varier à la demande la zone de chute des engrais sur le disque.

Cette zone se trouve idéalement à l'avant du centre du disque, un peu vers la gauche.

On a repéré par les références 3 et 4 deux zones de chute possibles d'engrais sur le disque.

Chaque zone 3 et 4 a été représentée symboliquement sous la forme de deux petits segments de droites, l'un en trait plein (3′ et 4′), l'autre en traits interrompus (3˝ et 4˝). Ainsi, les segments 3˝ et 4˝ sont représentatifs d'une partie du flux d'engrais qui tombe sur le disque en l'une des deux zones (3, respectivement 4), du côté du centre C de ce disque. Les segments 3′ et 4′ correspondent au reste du flux, lequel tombe du côté extérieur.

En référence à l'exemple de la zone 3, les engrais qui tombent dans la zone représentée par le segment 3′ sont repris par la pale 2 et éjectés par celle-ci. La distance à laquelle ces engrais sont éjectés dépend non seulement de la vitesse de rotation du disque mais également la distance de leur point de chute sur le disque par rapport à l'extrémité libre de la pale 2.

Ainsi, les engrais qui tombent dans la région 3˝ seront projetés à une distance supérieure à celle des engrais tombés dans la zone 3′ du fait qu'ils vont acquérir (sous l'effet de la force centrifuge) une vitesse plus importante lors de leur transfert par la pale 2.

D'ailleurs, on a déjà proposé des goulottes qui présentent une découpure placée du côté du centre du disque de manière à ce qu'une petite partie du flux d'engrais tombe à proximité du centre du disque, et soit par conséquent projeté à une grande distance par les pales éjectrices. Le spectre obtenu avec une goulotte de ce genre présente donc une répartition moins dense mais plus large des engrais.

Selon l'invention, le procédé pour modifier le spectre en vue de l'épandage d'engrais en bordure de champ consiste à intercepter et dévier la partie du flux d'engrais, qui correspond à un épandage vers la zone de bordure, pour la diriger vers le reste du flux. Dans la configuration présentée à la figure 3, la partie du flux qui va assurer l'épandage en bordure (située sur la droite) correspond à la zone 3˝, située du côté du centre C du disque. En l'occurence, c'est cette partie qui va être interceptée et dirigée vers l'extérieur du disque, pour être incorporée à la partie restante, correspondant à la zone 3′. Bien entendu, la trajectoire de cette partie restante du flux n'est pas, elle, modifiée. Ainsi, on va procéder à un épandage plus dense mais moins large des engrais, de façon à ne pas projeter ceux-ci au-delà de la bordure de champ.

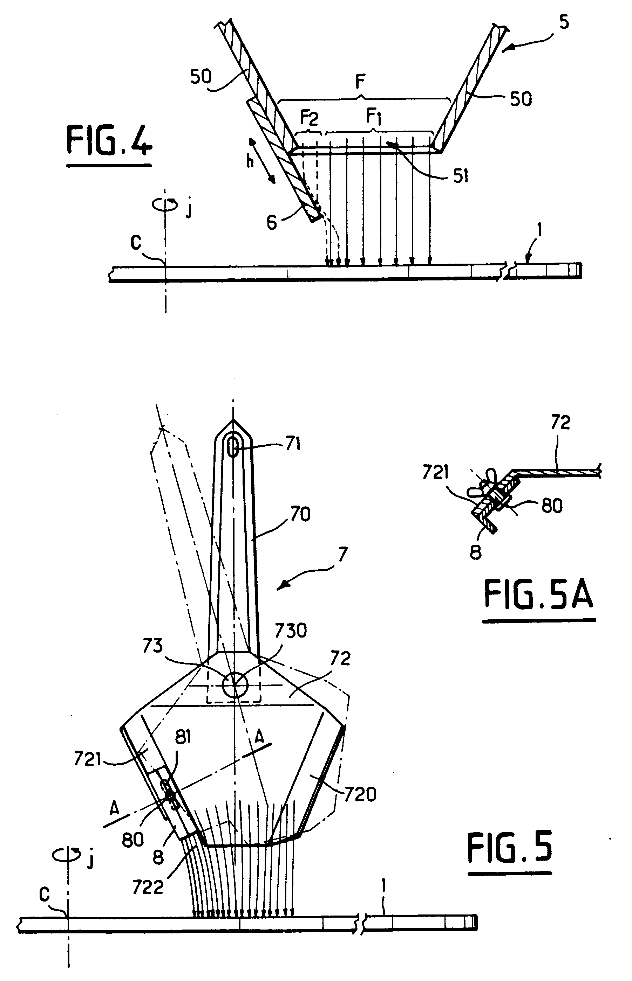

Un dispositif pour la mise en oeuvre de ce procédé, dans la même configuration que celle illustrée à la figure 3, est représenté à la figure 4.

Sur la paroi 50 d'une trémie 5 de réception d'engrais, est disposé un volet coulissant 6. Des moyens de type connu permettent le guidage de ce volet par rapport à la trémie. La possibilité de mouvement du volet par rapport aux parois 50 de la trémie est symbolisé par la double flèche h. Le fond de trémie présente une ouverture 51 de sortie des engrais.

On a représenté schématiquement le disque 1 sur lequel tombent les engrais, les références C et j désignant respectivement le centre de rotation du disque et le sens de rotation de celui-ci.

F désigne le flux d'engrais qui s'écoule par gravité de la trémie. La partie de flux F₁, qui constitue par exemple 80 % du flux F d'engrais tombe directement sur le disque 1.

La partie F₂, représentée par des flèches en traits interrompus et qui est située dans la zone la plus proche du centre C du disque, est déviée par le volet 6 de sorte que les engrais de cette partie de flux sont rabattus vers les engrais du flux F₁.

Par conséquent, par rapport à la situation dans laquelle le volet 6 est complètement relevé, et dans laquelle il laisse libre passage à la totalité du flux, la zone d'impact des engrais sur le disque occupe une surface plus petite mais avec une densité de produits plus grande sur une zone située du côté du centre du disque, sans modification de l'autre partie du flux.

On comprend alors que le spectre de distribution correspondant est modifié, la zone T₂ du spectre S₂ (voir figure 1) étant tronquée. On obtient alors un spectre du type de celui désigné sous la référence S′₂ à la figure 2. Les engrais ne sont donc pas distribués au-delà de la bordure.

A la figure 5 est représentée une goulotte réglable de type connu, équipée d'un volet déflecteur mobile.

Cette goulotte 7 présente un manche 70 soudé sur un corps de goulotte 72. Le manche 70 présente non loin de son extrémité libre une lumière 71 de forme oblongue. Le corps de goulotte a une forme sensiblement pentagonale. Ses deux côtés opposés 720 et 721 sont rabattus de façon à former avec le fond du corps de goulotte un angle supérieur à 90°. Dans la partie supérieure du corps de goulotte est prévue une ouverture circulaire 73. La partie inférieure du rebord 721 présente une découpure 722 et il reçoit un volet déflecteur 8, qui a la forme d'une cornière en "L" (voir figure 5A).

Ce volet peut se déplacer longitudinalement le long du rebord 721. Pour ce faire, le volet porte un boulon (à écrou à oreilles) 80 qui peut coulisser dans une lumière 81, de forme allongée, prévue dans le rebord 721, et qui permet de bloquer rapidement le volet dans la position souhaitée.

De façon connue, la goulotte 7 peut pivoter autour d'un arbre (non représenté), traversant l'ouverture 73. Elle est donc orientable, ce qui permet à l'utilisateur de régler la largeur d'épandage. On a repéré par la référence 730 l'axe de pivotement de la goulotte. La lumière 71 est prévue pour recevoir une molette de réglage rapide de la goulotte, associé avec un curseur. On a repéré par un contour en traits mixtes une seconde position possible de la goulotte.

Bien entendu, cette goulotte est disposée juste en sortie de trémie de sorte que les engrais tombent directement sur le corps 72 de celle-ci, les bords relevés 720 et 721 canalisant jusqu'à leur bord inférieur les granulés vers le disque 1.

Les engrais, qui lors de leur chute arrivent en contact avec le volet déflecteur 8 sont déviés et sont rabattus vers le reste du flux. Bien entendu, en fonction du réglage de la position du volet 8 par rapport au corps de goulotte, on peut faire varier la surface et la densité de la zone d'impact des engrais sur le disque 1 et, de ce fait modifier le spectre d'épandage obtenu. Pour ce faire, il peut être prévu sur le volet déflecteur 8 des repères, donnant une indication de la largeur du spectre obtenu.

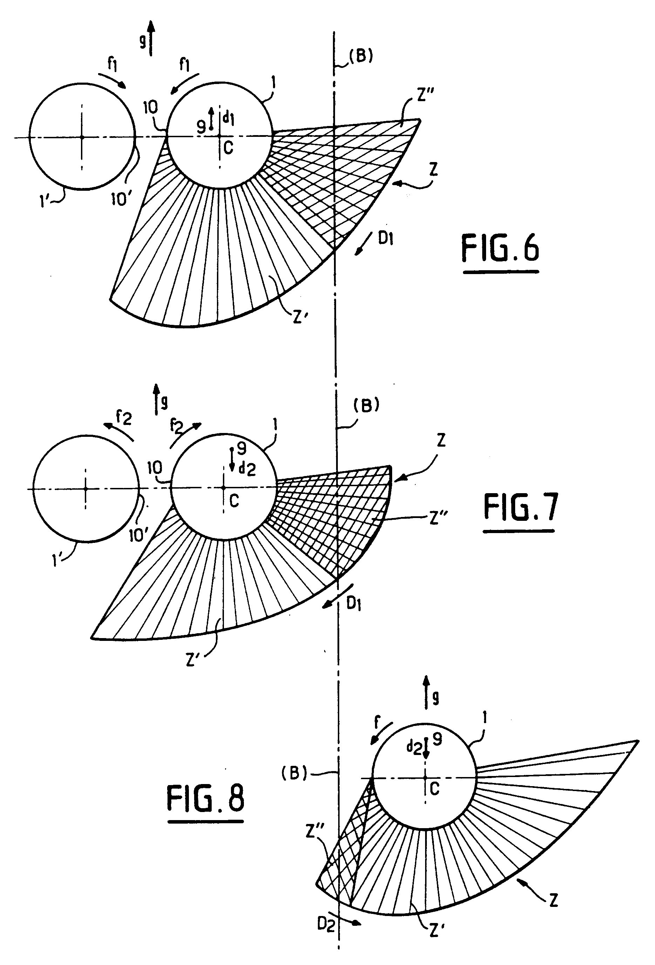

Les figures 6 à 8 illustrent des configurations de travail différentes.

La configuration de la figure 6 correspond à celle décrite en référence aux figures 3 à 5. La machine, dont le sens de l'avance est symbolisé par la flèche g, comporte deux disques épandeurs 1, 1′, qui tournent en sens inverses, comme symbolisé par les flèches f1. Ces sens sont tels que les bords 10, 10′ des disques qui se trouvent en regard (c'est-à-dire tournés l'un vers l'autre), se déplacent circonférentiellement dans le sens inverse de g.

La bordure B du champ, symbolisée par un trait interrompu mixte, se trouve sur la droite de la machine (si on considère son sens d'avancement).

La zone d'épandage qui est obtenue normalement - c'est-à-dire sans déviation quelconque du flux - au moyen du disque 1 est représentée sous la forme d'une surface hachurée Z.

Bien entendu, l'autre disque 1′ réalise un épandage similaire, dont la zone (non représentée) est disposée symétriquement vers l'autre côté de la machine (vers le centre du champ).

La surface Z comprend deux parties Z′ (hachures simples) et Z˝ (hachures croisées) qui correspondent à des épandages faits respectivement à l'intérieur du champ et au-delà de la bordure B. On a représenté symboliquement sous la forme d'un point, et désigné par la référence 9, la zone de chute sur le disque 1 de la partie du flux de grains qui correspond à la surface Z˝. Cette zone, comme déjà expliqué plus haut, est située du côté du centre du disque.

Selon l'invention, on va déplacer cette zone vers l'extérieur (flèche d1), ce qui va avoir pour effet de rabattre la surface Z˝ sur Z′ (flèche D1).

Dans la configuration de la figure 7, la machine est aussi équipée de deux disques épandeurs 1, 1′ qui tournent en sens inverses (flèches f2). Cependant, ici ces sens sont tels que les bords 10, 10′ se déplacent dans le même sens que g. Dans ce cas, la chute des grains sortant de la trémie se fait généralement à l'avant et un peu sur la droite du centre du disque 1 (en avant et à gauche sur le disque 1′). Dans ces conditions, la surface d'épandage en bordure Z˝ est due à la partie des grains éjectés en premier, ce qui correspond à la partie du flux tombant dans une zone 9 située vers l'extérieur du disque 1.

Conformément à l'invention, cette partie du flux va être déviée vers le centre C du disque (flèche d2), afin d'être incorporée dans le reste du flux, de sorte que la surface Z˝ est ramenée dans Z′ (flèche D1). Tout épandage au-delà de la bordure B se trouve donc ainsi éliminé.

Dans la configuration de la figure 8, on a affaire à un épandage à l'aide d'un seul disque. Il peut s'agir soit d'une machine équipée d'un disque central unique 1, soit d'une machine à deux disques dont l'un seulement est rendu actif (l'alimentation de l'autre ayant été coupée par fermeture de la trappe correspondante de sortie de trémie). Dans le cas d'un disque central unique, la chute des grains se fait d'ordinaire en avant et sensiblement dans l'axe du disque.

Ce disque tourne dans le même sens que le disque 1 des figures 3 et 6. Si la bordure est située sur la droite de la machine, les dispositions à prendre sont les mêmes que celles déjà décrites en référence à ces figures (déviation vers l'extérieur du disque de la partie de flux correspondant aux zones 3˝ et 9).

Si, au contraire, la bordure de champ B se trouve à gauche, dans la configuration de la figure 8, la surface Z correspond à une partie du flux arrivant en une zone 9 située du côté extérieur sur le disque 1. Comme dans le cas de la figure 7, la déviation de la zone 9 consiste donc en un déplacement vers le centre (flèche d2) de cette zone. Il en résulte une déviation vers la droite, en deçà de la bordure B, de la surface Z˝ (flèche D2).

Dans le cas d'une machine à disque unique, il peut par conséquent être intéressant de prévoir un dispositif capable, à la demande, de dévier une partie du flux soit vers l'intérieur soit vers l'extérieur du disque, de sorte que le procédé objet de l'invention peut être mis en oeuvre indifféremment, que la bordure se trouve sur le côté gauche ou sur le côté droit de la machine.

Pour cela le dispositif peut soit comporter deux volets indépendants, manoeuvrables sélectivement, soit être constitué d'une paire de volets actionnables en bloc, mais dont l'un seulement va intercepter et dévier l'une ou l'autre partie d'extrémité du flux de grains tombant sur le disque.

Selon une variante de réalisation, le volet est du type articulé autour d'un axe horizontal.

On peut prévoir des moyens qui permettent de commander à distance le déplacement du volet déflecteur, par exemple du poste de conduite du tracteur sur lequel est montée la machine d'épandage. Ainsi, lorsque l'agriculteur arrive en bordure de champ, il peut commander le réglage du volet 8 sans avoir à descendre de son tracteur.

Ces moyens, dont la conception est à la portée de l'homme du métier, peuvent être mécaniques, électriques, voire hydrauliques ou pneumatiques.

Du fait que le dispositif selon l'invention est simple et peu coûteux, il peut être prévu un volet déflecteur tel que celui décrit plus haut au-dessus de chacun des deux disques épandeurs de la machine (dans l'hypothèse où la machine est équipée de deux disques). De cette façon, l'agriculteur peut procéder à l'épandage en bordure de champ sans avoir à tenir compte du sens de travail qu'il a adopté.

Des volets déflecteurs, conformes à l'invention, peuvent être montés, soit directement, soit avec des modifications mineures, sur des dispositifs d'épandage existants.

## Revendications

1. Procédé pour modifier le spectre d'une machine d'épandage centrifuge de produits en grains en vue de l'épandage des produits en bordure de champ (B), cette machine comportant une trémie (5) de réception des produits, et au moins un disque épandeur (1) à pales éjectrices (2,2'), de sorte que les produits s'écoulent de la trémie (5) sous le forme d'un flux pour tomber sur le disque épandeur (1), caractérisé en ce qu'on intercepte et on dévie une partie (F2) de ce flux, partie qui correspond à un épandage vers la zone de bordure (B), pour la diriger vers le reste du flux (F1), ceci sans intercepter ni dévier cette partie restante du flux.

2. Dispositif pour la mise en oeuvre du procédé selon la revendication 1, comprenant une machine d'épandage centrifuge de produits en grains comportant une trémie (5) de réception des produits, et au moins un disque épandeur (1) à pales éjectrices (2,2'), dans laquelle les produits s'écoulent de la trémie (5) sous la forme d'un flux pour tomber sur le disque épandeur (1), caractérisé en ce qu'il comprend un volet déflecteur mobile (6 ; 8) disposé en sortie de trémie (51), apte à intercepter et dévier une partie (F2) du flux de produits s'écoulant de la trémie (5) vers le disque épandeur (1), partie qui correspond à un épandage vers la zone de bordure (B), pour la diriger vers le reste du flux (F1), ceci sans intercepter ni dévier cette partie restante du flux.

3. Dispositif selon la revendication 2 comportant une paire de disques (1, 1') épandeurs qui tournent dans des sens inverses tels que leurs bords en regard (10, 10') se déplacent circonférentiellement dans le sens opposé au sens d'avance de la machine, caractérisé par le fait que le volet déflecteur (6 ; 8) intercepte une partie (F2) du flux qui est située du côté du centre (C) du disque, pour la diriger vers l'extérieur et l'incorporer au reste du flux (F1).

4. Dispositif selon la revendication 2 comportant une paire de disques (1, 1') épandeurs qui tournent dans des sens inverses tels que leurs bords en regard (10, 10') se déplacent circonférentiellement dans le même sens que le sens d'avance de la machine, caractérisé par le fait que le volet déflecteur intercepte une partie du flux qui est située vers l'extérieur du disque pour la diriger vers le centre, et l'incorporer au reste du flux.

5. Dispositif selon la revendication 2 comportant soit un disque unique d'épandage, soit deux disques dont un seul est actif, caractérisé par le fait que le volet déflecteur est adapté pour intercepter sélectivement soit une partie du flux située vers le centre du disque pour la diriger vers l'extérieur, soit une partie du flux située vers l'extérieur pour la diriger vers le centre.

6. Dispositif selon l'une des revendications 2 à 5, caractérisé par le fait que la position du volet déflecteur (6, 8) est ajustable, des moyens de repérage étant prévus qui permettent de visualiser sa position.

7. Dispositif selon l'une des revendications 2 à 6, caractérisé en ce que le volet déflecteur (8) est porté par une goulotte orientable (7).

8. Dispositif selon l'une des revendications 2 à 7, caractérisé en ce que ledit volet (6 ; 8) est coulissant.

9. Dispositif selon l'une des revendications 2 à 7, caractérisé en ce que ledit volet est articulé autour d'un axe horizontal.

10. Dispositif selon l'une des revendications 2 à 9, caractérisé en ce que le mouvement du volet (6 ; 8) est commandable à distance, par exemple à partir de l'engin qui tracte la machine d'épandage.

11. Dispositif selon l'une des revendications 2 à 10, caractérisé en ce qu'il est prévu un volet déflecteur (6 ; 8) au-dessus de chaque disque.

## Claims

1. A method for altering the distribution pattern of a centrifugal broadcaster for seed products with a view to spreading the products along the edges of fields (B), the machine comprising a hopper (5) for receipt of the products, and at least one spreading disk (1) with ejector blades (2, 2') so that the products flow from the hopper (5) in the form of a flow to fall onto the spreading disk (1), characterized in that part (F2) of this flow, a part corresponding to spreading towards edge areas (B), is intercepted and diverted to direct it towards the remainder of the flow (F1), without intercepting or diverting this remaining part of the flow.

2. A device for implementing the method according to claim 1, comprising a centrifugal broadcaster for seed products comprising a hopper (5) for receipt of the products, and at least one spreading disk (1) with ejector blades (2, 2') in which the products flow from the hopper (5) in the form of a flow to fall on to the spreading disk (1), characterized in that it comprises a moving deflector shutter (6, 8) located at the hopper outlet (51) which is capable of intercepting and diverting part (F2) of the flow of products flowing from the hopper (5) towards the spreading disk (1), a part which corresponds to spreading towards edge areas (B) to direct it towards the remainder of the flow (F1), without intercepting or diverting this remaining part of the flow.

3. A device according to claim 2, comprising a pair of spreading disks (1, 1') which rotate in opposite directions so that their opposing edges (10, 10') move circumferentially in a direction opposite to the direction of advance of the machine, characterized in that the deflector shutter (6, 8) intercepts a part (F2) of the flow which is located towards the centre (C) of the disk, to direct it outwards and incorporate it with the remainder of the flow (F1).

4. A device according to claim 2, comprising a pair of spreading disks (1, 1') which rotate in opposite directions so that their opposing edges (10, 10') move circumferentially in the same direction as the direction of advance of the machine, characterized in that the deflector shutter intercepts part of the flow which is located towards the outside of the disk to direct it towards the centre, and to incorporate it into the remainder of the flow.

5. A device according to claim 2, comprising either a single spreading disk or two disks of which only one is driven, characterised in that the deflector shutter is designed to selectively intercept either part of the flow located towards the centre of the disk in order to direct it outwards, or part of the flow located towards the exterior in order to direct it towards the centre.

6. A device according to any one of claims 2 to 5, characterised in that the position of the deflector shutter (6, 8) is adjustable, reference means being provided to enable its position to be displayed.

7. A device according to any one of claims 2 to 6, characterised in that the deflector shutter (6, 8) is carried by a directable chute (7).

8. A device according to any one of claims 2 to 7, characterised in that the said shutter (6, 8) slides.

9. A device according to any one of claims 2 to 7, characterised in that the said shutter is hinged about a horizontal axis.

10. A device according to any one of claims 2 to 9, characterised in that the movement of the shutter (6, 8) can be controlled remotely, for example from the machine drawing the broadcaster.

11. A device according to any one of claims 2 to 10, characterised in that a deflector shutter (6, 8) is provided above each disk.

## Patentansprüche

1. Verfahren zum Modifizieren des Spektrums eines Schleuderstreuers für körniges Material in Hinsicht auf das Streuen des Materials auf einen Feldrand (B), wobei dieser Streuer einen Trichter (5) zur Aufnahme des Materials und mindestens eine Streuerscheibe (1) mit Auswurfflügeln (2, 2') aufweist, wobei das Material in Form eines Stromes aus dem Trichter (5) ausströmt, um auf die Streuerscheibe (1) zu fallen, dadurch **gekennzeichnet**, daß ein Teil (F2) dieses Stromes unterbrochen und abgelenkt wird, wobei der Teil einer Streuung in Richtung des Randbereichs (B) entspricht, um diesen in Richtung des Restes des Stromes (F1) zu lenken, ohne diesen Restteil des Stromes zu unterbrechen oder abzulenken.

2. Vorrichtung zur Durchführung des Verfahrens nach Anspruch 1, mit einem Schleuderstreuer für körniges Material, welcher einen Trichter (5) zur Aufnahme des Materials und mindestens einer Streuerscheibe (1) mit Auswurfflügeln (2, 2') aufweist, bei der das Material in Form eines Stromes aus dem Trichter (5) ausströmt, um auf die Streuerscheibe (1) zu fallen**, gekennzeichnet** durch eine bewegliche Ablenkklappe (6; 8), die am Ausgang des Trichters (51) angeordnet ist und die einen Teil (F2) des Materialstromes, welcher aus dem Trichter (5) in Richtung der Streuerscheibe (1) ausströmt, unterbrechen und ablenken kann, wobei dieser Teil einer Streuung in Richtung des Randbereiches (B) entspricht, um diesen in Richtung des Restes des Stromes (F1) zu lenken, ohne diesen Restteil des Stromes zu unterbrechen oder abzulenken.

3. Vorrichtung nach Anspruch 2, mit einem Paar Steuerscheiben (1, 1'), welche sich in entgegengesetzte Richtungen drehen, so daß ihre sich gegenüberliegenden Kanten (10, 10') sich in Umfangsrichtung in die zur Richtung der Vorwärtsbewegung des Streuers entgegengesetzte Richtung bewegen, dadurch **gekennzeichnet**, daß die Ablenkklappe (6; 8) einen Teil (F2) des Stromes unterbricht, welcher im Bereich der Mitte (C) der Scheibe liegt, um diesen in Richtung nach außen zu lenken und in den Rest des Stromes (F1) einzubringen.

4. Vorrichtung nach Anspruch 2, mit einem Paar Streuerscheiben (1, 1'), welche sich in entgegengesetzte Richtungen drehen, so daß ihre sich gegenüberliegenden Kanten (10, 10') sich in Umfangsrichtung in dieselbe Richtung wie die Vorwärtsbewegungsrichtung des Streuers bewegen, dadurch **gekennzeichnet**, daß die Ablenkklappe einen Teil des Stromes unterbricht, welcher in einem Außenbereich der Scheibe liegt, um diesen in Richtung der Mitte zu lenken und in den Rest des Stromes einzubringen.

5. Vorrichtung nach Anspruch 2, mit entweder einer einzigen Streuerscheibe oder zwei Scheiben, von denen nur eine aktiv ist, dadurch **gekennzeichnet**, daß die Ablenkklappe wahlweise entweder einen Teil des Stromes unterbrechen kann, welcher im Bereich der Mitte der Scheibe liegt, um diesen nach Außen zu lenken, oder einen Teil des Stromes, der in einem Außenbereich liegt, um diesen zur Mitte zu lenken.

6. Vorrichtung nach einem der Ansprüche 2 bis 5, dadurch **gekennzeichnet**, daß die Position der Ablenkklappe (6, 8) einstellbar ist, wobei eine Peilvorrichtung vorgesehen ist, mit der die Position angezeigt werden kann.

7. Vorrichtung nach einem der Ansprüche 2 bis 6, dadurch **gekennzeichnet**, daß die Ablenkklappe (8) von einer einstellbaren Rutsche (7) getragen ist.

8. Vorrichtung nach einem der Ansprüche 2 bis 7, dadurch **gekennzeichnet**, daß die Klappe (6; 8) verschiebbar ist.

9. Vorrichtung nach einem der Ansprüche 2 bis 7, dadurch **gekennzeichnet**, daß die Klappe um eine horizontale Achse schwenkbar ist.

10. Vorrichtung nach einem der Ansprüche 2 bis 9, dadurch **gekennzeichnet**, daß die Bewegung der Klappe (6; 8) aus der Entfernung steuerbar ist, beispielsweise von einer Maschine, welche den Streuer zieht.

11. Vorrichtung nach einem der Ansprüche 2 bis 10, dadurch **gekennzeichnet**, daß eine Ablenkklappe (6; 8) über jeder Scheibe vorgesehen ist.
